# FASCICULE DE BREVET EUROPEEN

(11) **EP 0 323 369 B1**
(45) Date de publication et mention de la délivrance du brevet: **28.04.1993**
(21) Numéro de dépôt: 88420393.6
(22) Date de dépôt: 25.11.1988
(51) Int. Cl.: G09B 27/02

(54) **Planétaire**
Planetarium
Planetarium

(30) Priorité: 03.12.1987 FR 8717359
(43) Date de publication de la demande: 05.07.1989
(73) Titulaire: GROUPEMENT POUR L'AUTOMATISATION DE LA PRODUCTION -G.A.P.-, F-42000 Saint-Etienne (FR); Coudurier, Pierre, F-42000 Saint-Etienne (FR)
(72) Inventeur: Aufranc Michel, 42800 Dargoire (FR); Boutte Pierre, 42490 Fraisses (FR); Romeuf Patrick, 42390 Sorbiers (FR); Tronchon Paul, 38460 Chozeau (FR); Coudurier Pierre, 42000 Saint Etienne (FR)
(74) Mandataire: Dupuis, François

(56) Documents cités:
- DE-A- 3 225 527
- DE-B- 1 497 739
- US-A- 3 863 363

## Description

L'invention a pour objet un planétaire.

On rappelle succintement qu'un planétaire a pour objet de simuler les divers mouvements des astres dans le ciel sur une voute généralement hémisphérique.

On connait déjà de nombreux brevets ayant décrits des planétaires tels que ceux développés par les Sociétés SPITZ, ZEISS et autres. Ils sont en général d'un haut niveau, d'une structure générale très complexe, et donc d'un coût élevé, ce qui a limité à ce jour leur généralisation en égard aux investissements à engager.

A la connaissance actuelle des demandeurs, il n'y a par exemple en France que trois planétariums du type précité qui fonctionnent et sont installés dans des lieux très fréquentés essentiellement à caractère scientifiques. Les planétariums ont un aspect scientifique évident, et ont également un grand intérêt au plan de l'enseignement, formation et pédagogie. Compte tenu des conditions actuelles, il n'y a qu'une très faible population qui peut les découvrir dans des conditions souvent très particulières, et dans un environnement plus global.

Devant l'importance des besoins constatés et dans le souci de développement des connaissances et d'une formation réelle continue, il est apparu nécessaire aux demandeurs de développer un type de planétariums de structure simple et peu coûteuse tout en étant d'une grand fiabilité et précisions scientifiques et utilisables avec des voûtes hémisphériques aussi bien horizontales que hyposphériques (inclinées).

DE-A-1 497 739 divulgue un tel planétaire.

En égard des planétaires existants selon l'art antérieur, un but recherché selon l'invention était de trouver un mécanisme qui n'occulte pas les rayonnement lors des différents mouvements pour suivre l'évolution de la voûte céleste au fur et à mesure des phases diurnes et nocturnes.

Ce but a été atteint par les caractéristiques selon la revendication 1.

Ces caractéristiques et d'autres encore ressortiront bien de la suite de la description.

Pour fixer l'objet de l'invention illustrée d'une manière non limitative aux figures des dessins où :
- La figure 1 est une vue en perspective illustrant d'une manière schématique la structure support du planétaire mettant en évidence les différents sens de rotation des éléments constitutifs du planétaire.
- La figure 2 est une vue en perspective illustrant le planétaire selon l'invention, dans une deuxième réalisation, protégé dans un carter avec disposition de torches lumineuses.
- La figure 3 est une vue à grande échelle selon la figure 2 du planétaire avec coupe partielle illustrant les différents composants.

Afin de rendre plus concret l'objet de l'invention, on le décrit maintenant d'une manière non limitative illustrée aux figures des dessins.

Le planétaire selon les demandeurs est conçu pour fonctionner dans une salle équipée d'une voûte hémisphérique de l'ordre de 8 à 15 mètres de diamètre. Il comprend trois modules principaux, la sphère (S) prise dans son ensemble, les torches lumineuses (T) et un module de pilotage. Un logiciel d'exploitation permet la création et la production de spectacles d'animation.

Plus particulièrement, la sphère est réalisée en deux demi-sphères (1-2) distinctes et opposées, métalliques, solidaires l'une de l'autre et qui se déplacent sous l'action d'une motorisation pilotée suivant trois axes ainsi qu'exposé ci-après par une structure-support très particulière ; les deux demi-sphères présentent leur plan diamètral en regard selon un espacement (e) règlable selon l'endroit où est positionné le planétaire dans une salle en rapport des distances avec la voûte hémisphérique afin de conserver une représentation unique sur la voûte pour un même point.

La structure porteuse comprend un socle formant embase (3) avec un carter de protection caréné (4) périphérique conférant également une certaine esthétique.

A partir du socle précité et disposé directement ou d'une manière rapportée un arceau (5) en forme de demi-cercle entourant les deux demi-sphères, ledit arceau étant support par des moyens complémentaires des deux demi-sphères (1-2) précitées, l'objectif étant que par le montage considéré de celles-ci, aucun moyen mécanique ou de structure ou autres ne vienne interférer dans l'espace "e" défini entre elles, laissant libre la représentation de la voûte céleste.

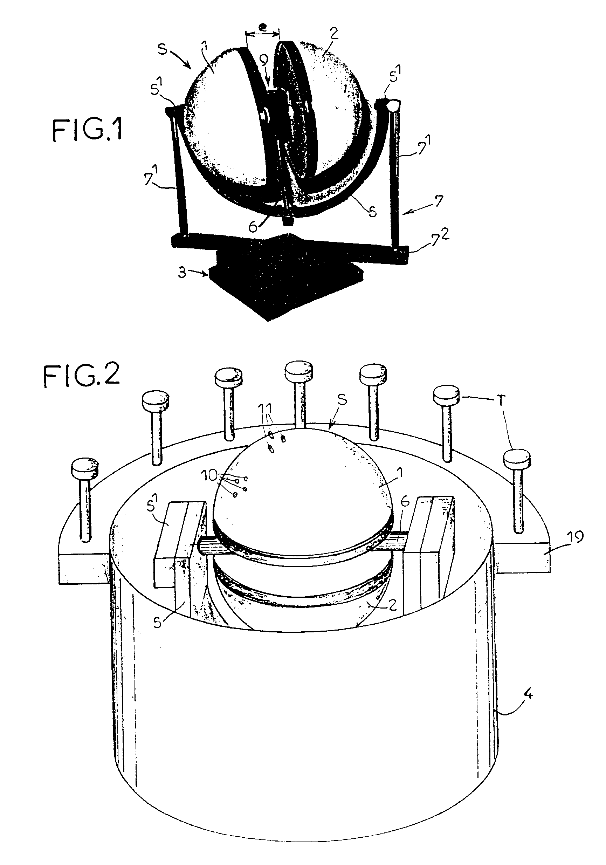

Ainsi qu'il apparait aux figures, les deux demi-sphères (1-2) sont reliées entre elles dans leur partie centrale par des moyens supports assurant notamment une première fonction de liaison, qui seront décrit ultérieurement. Ils comprennent notamment ainsi qu'illustré et dans une première réalisation, figure 1, une tige formant tube assurant une première fonction de liaison (6) à position fixe passant entre deux demi-sphères et dont le point d'attache est fixé sur la partie médiane de l'arceau (5) constituant un rayon en égard audit arceau les deux demi-sphères se trouvant alors disposées dans leur plan diamétral vertical. Dans ce cas, les extrémités (5.1) libres de l'arceau sont associées à pivotement libre sur les branches verticales (7.1) d'un support étrier (7) en forme de U dont la base (7.2) est solidarisée au socle (3) de la structure, tout en conservant une liberté de rotation dans le plan horizontal. Dans cette mise en oeuvre, on définit ainsi deux mouvements commandés par des moteurs (M1-M2) autorisant respectivement le pivotement de l'arceau par rapport au socle selon un balayage horizontal, et le basculement des deux demi-sphères par l'intermédiaire du mouvement circulaire de l'arceau par rapport à l'axe horizontal donné par ses points d'attache et de fixation. Pour ce faire, dans cette mise en oeuvre le moteur (M1) est rapporté et fixé de toutes manières appropriées sur le socle et donne le mouvement par une transmission appropriée à l'étrier (7), tandis que le moteur (M2) est monté solidarisé à des moyens de l'une des branches verticales de l'étrier (7) support de l'arceau commandant l'orientation de ce dernier.

Dans la réalisation de la figure 2 en variante tout en conservant le même concept de non occultation de l'espace (e) entre les deux demi-sphères lors des différents mouvements, l'arceau (8) est directement fixé au socle (3) tout en conservant une capacité de rotation et balayage dans le plan horizontal commandé par un moteur (M1). Les deux demi-sphères sont situées avec leur plan diamétral horizontal, le basculement des deux demi-sphères s'effectue par rapport et tout autour de l'axe horizontal précité selon la commande du moteur (M2) fixé de manière appropriée à l'une des branches de l'arceau. Une tige ou tube assurant une première fonction de liaison (6) rend solidaires les moyens supports des deux demi-sphères à l'arceau.

Un troisième moteur (M3) est associé pour commander en rotation sur elle-même les demi-sphères (1-2). Ce troisième moteur est rapporté et fixé par rapport au moyen intermédiaire de liaison entre les deux demi-sphères (1-2). La combinaison et fonctionnement des trois moteurs (M1-M2-M3) permet une orientation selon les trois axes géométriques dans l'espace permettant de représenter tous les mouvements des astres à tout moment.

Le moteur (M1) donne le mouvement au pôle, le moteur (M2) le mouvement de variation de latitude, le moteur (M3) le mouvement diurne.

Ainsi qu'illustré, les deux demi-sphères comprennent une enveloppe métallique extérieure et sont reliés par la partie centrale de leur face diamétrale à des moyens supports (9) pris dans leur ensemble. Ces derniers sont agencés notamment pour recevoir et permettre par des roulements, galets, (20) incorporés ou similaires la rotation des demi-sphères sur elles-mêmes, tandis que des moyens de transmission non illustrés permettent le transfert des mouvements du moteur (M3) auxdits demi-sphères selon des dispositions mécaniques bien connues.

Les demi-sphères sont percées au total d'environ 3 000 trous (10), chacun correspondant à une étoile existante, la représentation des corps spécifiques étant prise en compte par un ensemble de lentilles optiques (11) rapportées et fixées de toute manière appropriée, collage ou autres sur la périphérie desdites demi-sphères, aux endroits désirés.

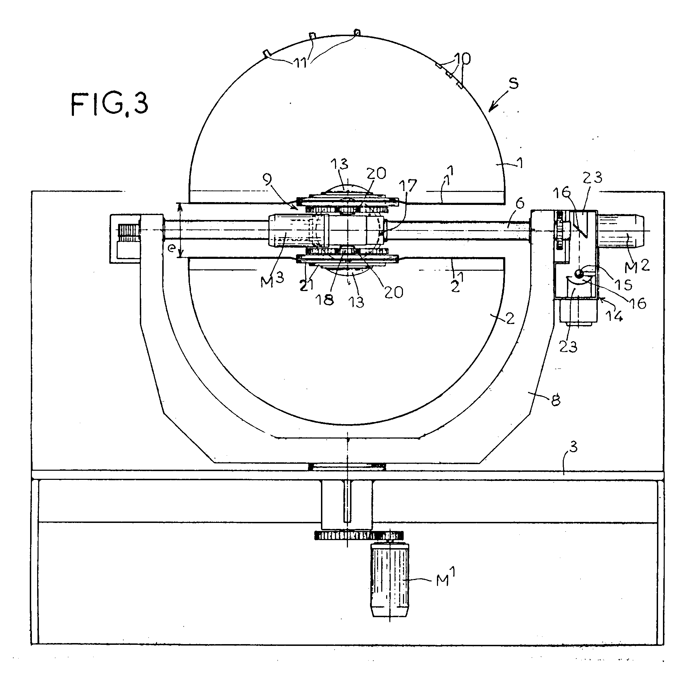

Ces lentilles au nombre d'une cinquantaine par exemple et non limitativement représentent les 50 étoiles les plus brillantes, la voie lactée et quelques objets célestes. Par leur grossissement, elles permettent de représenter sur la voûte des points ou zones éclairés de plus grande section. Un flux lumineux transite à travers les deux demi-sphères (1-2) pour aller frapper la voûte hémisphérique, ce flux ne pouvant passer qu'à travers les trous percés (10) et lesdites lentilles (11). Ce flux lumineux trouve son origine dans une source et est répartit dans chaque demi-sphère gràce à un objectif (13) ou lentille spécifique solidaire de chaque demi-sphères. Selon la figure 3, lesdits objectifs de forme convexe sont fixés de toute manière appropriée par des moyens de liaison (21) et fixation sur des faces diamètrales (1.1-2.1) des deux demi-sphères et sur les moyens supports centraux.

Selon une première mise en oeuvre, la source lumineuse est associée à un dispositif optique de renvoi qui est illustré figure 3. Il est de même conception également pour la réalisation de la figure 1. Dans cette mise en oeuvre un boîtier (14) ou similaire de forme parallélipipédique ou autre est fixé à l'arceau (8) et agencé intérieurement pour recevoir une lampe (15) dont la lumière est réfléchie par une ou des lentilles (16) de forme appropriée et disposées sur des supports adaptés (23). Le flux lumineux émis est alors projeté à l'intérieur de la tige de liaison formant tube (6) qui assure une seconde fonction de transfert du flux lumineux pour aboutir dans une sphère d'intégration (17) connue dans le commerce et représentée en traits interrompus courts. Celle-ci présente en regard de l'axe médian de chaque demi-sphère et perpendiculaire au plan diamétral un trou ou port (18) délivrant dans chaque demi-sphère (1₋2) un flux lumineux amplifié et réparti par l'objectif (13) sous forme de lentilles. L'ensemble ainsi réalisé assure une excellente répartition du flux lumineux. Le dispositif de source lumineuse et optique présente plusieurs avantages relatifs à leur simplicité, et à la facilité d'intervention rapide et de changement lorsque la lampe émettrice est détruite ou si l'on veut changer les lentilles (16).

Dans une seconde mise en oeuvre la source lumineuse peut être associée directement avec la sphère d'intégration (17).

Ainsi la source lumineuse comprend des lentilles optiques (11) précitées représentant certaines étoiles ou corps célestes, et également des torches (T) représentant les planètes et le soleil. Ces torches (T) ont un système optique propre et une source lumineuse indépendante et de faible puissance. Ces torches sont disposées sur un anneau (19) entourant le carter de protection du planétaire (figure 2), celui-ci servant ainsi de support ; ledit anneau pouvant être commandé en mouvement circulaire horizontal par tous moyens de commande et de guidage appropriés comme décrits et illustrés dans le détail. Ces torches sont elles-mêmes animées chacune d'un mouvement d'orientation donnée par un mécanisme approprié.

Pour assurer le fonctionnement du planétaire ainsi décrit, on utilise un module de pilotage comprenant un système de cartes électroniques pilotant les mouvements de l'ensemble et les coordonnant, chaque élément constitué soit par une torche (T) soit par une lentille optique (11) soit par les trous (10) réalisés dans les deux demi-sphères représentant l'un des corps célestes.

Le planétaire tel que décrit est d'une grande souplesse d'utilisation et permet des représentations de l'univers depuis n'importe lequel des points du système solaire.

En outre, un logiciel d'exploitation permet la fonctionnement du planétaire en mode création de spectacle, spectacle automatique, spectacle manuel.

Les avantages ressortent bien de la description, en particulier on souligne la simplicité du planétaire, l'absence de riques d'occultation de l'espace périphérique entourant les deux demi-sphères, les mouvements de la structure porteuse étant parfaitement intégrés et l'absence d'interférence des torches réprésentant notamment les planètes, entre les deux demi-sphères.

## Revendications

1. Planétaire du type comprenant une sphère constituée de deux demi-sphères (1,2) distinctes dont les plans diamétraux sont opposés et en regard, les deux demi-sphères (1,2) solidarisées entre elles dans la partie centrale de leur face diamètrale respective par des moyens support (9) assurant leur liaison, ceux-ci comprenant un moyen (6) disposé entre les deux demi-sphères et assurant une fonction de fixation par rapport à une structure porteuse, lesdites demi-sphères ayant une capacité de rotation sur elles-mêmes par rapport à leurs moyens supports (9), lesdites demi-sphères (1,2) étant agencées avec des moyens (10,11) représentant certains corps célestes qui comprend une seule source lumineuse autorisant la projection d'un flux lumineux et de représentation réparti simultanément dans les deux demi-sphères ; et ayant des torches (T) représentant d'autres corps célestes et notamment les planètes qui sont disposées sur un anneau (19) solidaire du carter de protection de ladite structure porteuse, ledit anneau étant extérieur aux deux demi-sphères et n'interférant pas, soit directement soit avec les torches (T), entre les deux demi-sphères.

2. Planétaire selon la revendication 1 caractérisé en ce que la structure porteuse comprend en particulier un arceau (5.1) présentant une forme en demi-cercle entourant par l'extérieur les deux demi-sphères et étant agencée pour être le support par des moyens de liaison approprié des deux demi-sphères.

3. Planétaire selon la revendication 2 caractérisé en ce que la structure porteuse comprend un socle formant embase (3) avec un arceau de protection (8), ledit arceau étant fixé à rotation libre et contrôlé par un premier moteur (M1).

4. Planétaire selon la revendication 3 caractérisé en ce que les moyens de solidarisation entre les deux demi-sphères comprennent notamment un moyen (6) assurant une première fonction de liaison à position fixe entre les deux demi-sphères et dont le point d'attache est fixé sur la partie médiane de l'arceau, les extrémités (5.1) dudit arceau étant associées à pivotement libre sur les branches verticales (7.1) dudit support étrier (7) en forme de V dont la base (7.2) est solidarisée au socle (3) de la structure en conservant une liberté de rotation dans le plan horizontal commandé par le moteur (M1)

5. Planétaire selon la revendication 3 caractérisé en ce que les moyens de solidarisation entre les deux demi-sphères comprennent notamment un moyen (6) assurant une première fonction de liaison à position fixe entre les deux demi-sphères et dont le point d'attache est fixé sur l'une des branches de l'arceau (7) ; celui-ci étant solidarisé au socle avec capacité de mouvement en rotation dans le plan horizontal commandé par le premier moteur (M1).

6. Planétaire selon la revendication 4 ou 5 caractérisé en ce qu'un second moteur (M2) est fixé pour autoriser le basculement de l'arceau (5-8) autour de son axe diamétral reliant ses extrémités.

7. Planétaire selon la revendication 1 caractérisé en ce que les deux demi-sphères (1-2) tournent en rotation sur elles-mêmes sous l'action d'un troisième moteur (M3) solidaire des moyens de liaison des deux demi-sphères entre elles incluant des moyens de transmission et de roulement (20).

8. Planétaire selon la revendication 1 caractérisé en ce que ce flux lumineux est issu de moyens d'emission et de transmission, lesdits moyens étant fixés par rapport à la structure porteuse, le moyen de liaison (6) transférant et répartissant ledit flux par des moyens appropriés dans les deux demi-sphères dont la périphérie est agencée avec une pluralité de trous (10) et de lentilles optiques rapportées (11) à travers lequel le flux est projeté sur la voûte, un objectif (13) de forme convexe étant fixé sur les faces diamétrales de chaque demi-sphère pour assurer la répartition du flux lumineux dans les demi-sphères.

9. Planétaire selon la revendication 8 caractérisé en ce que le moyen (6) disposé entre les deux demi-sphères assure une seconde fonction de transmission d'un flux lumineux à partir d'un dispositif d'émission de flux.

10. Planétaire selon la revendication 9 caractérisé en ce que les moyens d'émission et de transmission comprennent une source lumineuse (15) et des moyens optiques du type lentilles (16) insérées dans un boîtier fixé à la structure porteuse et en particulier à l'arceau, les moyens optiques transférant le flux émis par l'intermédiaire du moyen (6) dans une sphère d'intégration (17), celle-ci étant agencée avec des trous (18) communiquant le flux dans chacune des demi-sphères (1-2) en l'amplifiant par un objectif (13).

11. Planétaire selon la revendication 9 caractérisé en ce que les moyens d'émission et de transmission comprennent une source lumineuse, qui est directement associée à la sphère d'intégration.

12. Planétaire selon la revendication 1 caractérisé en ce que les torches (T) ont leur propre système optique et source lumineuse, lesdites torches étant disposées sur l'anneau (19) en ayant une capacité de mouvement circulaire horizontal par des moyens appropriés, lesdites torches pouvant être orientées par rapport à leur base support.

13. Planétaire selon l'une quelconque des revendications 1 à 12 caractérisé en ce qu'il comprend un module de pilotage constitué d'un système de cartes électroniques pilotant les mouvements de l'ensemble et les coordonnant.

## Claims

1. Planetarium of the type which includes a sphere consisting of two separate halves (1, 2) of a sphere, the diametral planes of which are opposed and facing one another, the two half-spheres (1, 2) being made depending on one another in the central portion of their respective diametral face by supporting means (9) which provide the connection of said half-spheres, said means comprising a means (6) disposed between the two half-spheres and providing a securing function relative to a supporting structure, said half-spheres having a capacity of rotation on themselves relative to their supporting means (9), said half-spheres (1, 2) being arranged with means (10, 11) featuring certain celestial bodies, and including a single luminous source authorizing the projection of a luminous flux and representation flux which is distributed simultaneously in the two half-spheres, said planetarium being also provided with torches (T) featuring other celestial bodies and more particularly the planets, which are disposed on a ring (19) solid with the protection housing of said supporting structure, said ring being external to the two half-spheres and producing no interference, either directly or through the agency of the torches (T), between the two half-spheres.

2. Planetarium as claimed in Claim 1, characterized in that the supporting structure includes more particularly a cradle (5,1) presenting a shape of a half-circle enclosing from outside the two half-spheres and being designed for being the support, through the agency of suitable connecting means, of the two half-spheres.

3. Planetarium as claimed in Claim 2, characterized in that the supporting structure includes a pedestal-forming bottom (3) with a protection cradle (8), said cradle being secured for free rotation and controlled by a first motor (M1).

4. Planetarium as claimed in Claim 3, characterized in that the means for making the two half-spheres depending on one another include more particularly a means (6) providing a first connecting function with fixed position between the two half-spheres, the fastening joint of which is secured on the medial portion of the cradle, the ends (5,1) of said cradle being associated for free swivelling on the vertical legs (7,1) of said U-formed yoke support (7) the bottom (7,2) of which is made solid with the pedestal (3) of the structure while maintaining a possibility of rotation within the horizontal plane controlled by the motor (M1).

5. Planetarium as claimed in Claim 3, characterized in that the means for making the two half-spheres depending on one another include more particularly a means (6) providing a first connecting function with fixed position between the two half-spheres, the fastening point of which is secured on one of the legs of the cradle (7), said cradle being made solid with the pedestal with a possibility of rotation within the horizontal plane controlled by the motor (M1).

6. Planetarium as claimed in Claim 4 or 5, characterized in that a second motor (M2) is provided in order to authorize the rocking over of the cradle (5 - 8) round the diametral axis thereof connecting up the ends of said cradle.

7. Planetarium as claimed in Claim 1, characterized in that the two half-spheres (1 - 2) are rotated on themselves by the actuation of a third motor (M3) associated with the connecting means of the two half-spheres to one another, said means including the transmission and rolling means (20).

8. Planetarium as claimed in Claim 1, characterized in that said luminous flux is sent from emission and transmission means which are fixed securedly relative to the supporting structure, the connecting means (6) transferring and distributing with the aid of suitable means said flux within the two half-spheres the periphery of which is arranged with a plurality of holes (10) and of inserted optical lenses (11), through which the flux is projected on the vault, a convex-shaped objective lens (13) being secured on the diametral faces of each half-sphere in order to provide the distribution of the luminous flux in the half-spheres.

9. Planetarium as claimed in Claim 8, characterized in that the means (6) disposed between the two half-spheres provides a second function of transmission of a luminous flux coming from a flux emitting device.

10. Planetarium as claimed in Claim 9, characterized in that the emission and transmission means include a luminous source (15) and optical means of the type of the optical lenses (16) engeged within a casing secured to the supporting structure and more particularly to the cradle, the optical means transferring the flux emitted through the intermediary of the means (6) within an integrating sphere (17) which is arranged with holes (18) communicating the flux into each one of the half-spheres (1 - 2) while amplifying it by means of an objective lens (13).

11. Planetarium as claimed in Claim 9, characterized in that the emission and transmission means include a luminous source which is associated directly with the integrating sphere.

12. Planetarium as claimed in Claim 1, characterized in that the torches (T) have their own optical system and luminous source, said torches being disposed on the ring (19) while having a possibility of horizontal circular motion provided by suitable means, and being adapted to be oriented relative to their supporting bottom.

13. Planetarium as claimed in any one of Claims 1 to 12, characterized in that said planetarium includes a piloting module consisting of a system of electronical cards piloting and co-ordinating the movements of the unit.

## Patentansprüche

1. Planetarium in der Ausführungsart, die eine Kugel bestehend aus zwei getrennten Halbkugeln (1,2) mit entgegengesetzten, gegenüberliegenden Durchmesserebenen beinhaltet, wobei die beiden Halbkugeln (1, 2) im mittleren Teil ihrer jeweiligen Durchmesserfläche fest miteinander verbunden sind durch Haltemittel (9), die ihre Verbindung sicherstellen und ein Mittel (6) beinhalten, das zwischen den beiden Halbkugeln angeordnet ist und eine Befestigungsfunktion in Bezug auf eine Tragstruktur erfüllt, wobei die genannten Halbkugeln in Bezug auf ihre Haltemittel (9) um sich selbst drehbar sind, wobei die genannten Halbkugeln (1, 2) mit bestimmte Himmelskörper darstellenden Mitteln (10, 11) ausgestattet sind, welches eine einzige Lichtquelle beinhaltet, die die Ausstrahlung eines Licht- und Darstellungsflusses ermöglicht, der in den beiden Halbkugeln gleichzeitig verteilt wird, und welches weitere Himmelskörper und insbesondere die Planeten darstellende Leuchten (T) aufweist, die auf einem mit dem Schutzgehäuse der genannten Tragstruktur fest verbundenen Ring (19) angebracht sind, wobei der genannte Ring außerhalb der beiden Halbkugeln liegt und nicht, weder direkt noch mit den Leuchten (T), mit den beiden Halbkugeln interferiert.

2. Planetarium nach Anspruch 1, dadurch gekennzeichnet, daß die Tragstruktur insbesondere einen halbkreisförmigen Bügel (5.1) beinhaltet, der die beiden Halbkugeln von außen umgibt und durch Verbindungsmittel als geeignete Halterung für die beiden Halbkugeln gestaltet ist.

3. Planetarium nach Anspruch 2, dadurch gekennzeichnet, daß die Tragstruktur einen eine Fußfläche (3) bildenden Sockel beinhaltet mit einem Schutzbügel (8), wobei der genannte Schutzbügel frei, durch einen ersten Motor (M1) gesteuert drehend befestigt ist.

4. Planetarium nach Anspruch 3, dadurch gekennzeichnet, daß die Mittel zur festen Verbindung zwischen den beiden Halbkugeln insbesondere ein Mittel (6) beinhalten, das eine erste Verbindungsfunktion in fester Position zwischen den beiden Halbkugeln erfüllt und dessen Anschlußpunkt am mittleren Teil des Bügels befestigt ist, wobei die Enden (5.1) des genannten Bügels frei schwenkbar mit den senkrechten Armen (7.1) des genannten U-förmigen Halters (7) verknüpft sind, dessen Fußelement (7.2) am Sockel (3) der Struktur fest angebunden ist und dabei durch den Motor (M1) gesteuert in waagerechter Ebene frei drehen kann.

5. Planetarium nach Anspruch 3, dadurch gekennzeichnet, daß die Mittel zur festen Verbindung zwischen den beiden Halbkugeln insbesondere ein Mittel (6) beinhalten, das eine erste Verbindungsfunktion in fester Position zwischen den beiden Halbkugeln erfüllt und dessen Anschlußpunkt an einem Arm des Bügels (7) befestigt ist, welcher am Sockel fest angebunden und dabei durch den Motor (M1) gesteuert in waagerechter Ebene drehbar ist.

6. Planetarium nach Anspruch 4 oder 5, dadurch gekennzeichnet, daß ein zweiter Motor (M2) so befestigt ist, daß er das Kippen des Bügels (5, 8) um seine seine Enden verbindende Durchmesserachse ermöglicht.

7. Planetarium nach Anspruch 1, dadurch gekennzeichnet, daß die beiden Halbkugeln (1, 2) um sich selbst drehen unter der Einwirkung eines dritten Motors (M3), der mit den Übertragungs- und Lagerungsmittel (20) einschließenden, die beiden Halbkugeln miteinander verbindenden Mitteln fest verbundenen ist.

8. Planetarium nach Anspruch 1, dadurch gekennzeichnet, daß dieser Lichtstrom von Sende- und Übertragungsmitteln ausgeht, wobei die genannten Mittel in Bezug auf die Tragstruktur befestigt sind, wobei das Verbindungsmittel (6) den genannten Strom durch geeignete Mittel in die beiden Halbkugeln überleitet und verteilt, deren Umfang mit einer Mehrzahl von Löchern (10) und angesetzten optischen Linsen (11) ausgestattet ist, durch die der Strom an das Gewölbe gestrahlt wird, wobei ein Objektiv (13) konvexer Form an den Durchmesserflächen jeder Halbkugel befestigt ist, um die Verteilung des Lichtstroms in den Halbkugeln zu gewährleisten.

9. Planetarium nach Anspruch 8, dadurch gekennzeichnet, daß das zwischen den beiden Halbkugeln angebrachte Mittel (6) eine zweite Funktion der Übertragung eines Lichtstroms ausgehend von einer Lichtsende-Vorrichtung erfüllt.

10. Planetarium nach Anspruch 9, dadurch gekennzeichnet, daß die Sende- und Übertragungsmittel eine Lichtquelle (15) und optische Mittel vom Typ Linsen (16) beinhalten, die in einem an der Tragstruktur und insbesondere am Bügel befestigten Kasten eingefügt sind, wobei die optischen Mittel den über das Mittel (6) ausgestrahlten Strom in eine Integrationskugel (17) überleiten, die mit Löchern (18) zur Übertragung des Flusses in jede Halbkugel (1, 2) unter gleichzeitiger Verstärkung durch ein Objektiv (13) ausgestattet ist.

11. Planetarium nach Anspruch 9, dadurch gekennzeichnet, daß die Sende- und Übertragungsmittel eine direkt mit der Integrationskugel verknüpfte Lichtquelle beinhalten.

12. Planetarium nach Anspruch 1, dadurch gekennzeichnet, daß die Leuchten (T) ein eigenes optisches System und eine eigene Lichtquelle besitzen, wobei die genannten Leuchten mit Möglichkeit durch geeignete Mittel zu waagerechter, kreisförmiger Bewegung auf dem Ring (19) angeordnet sind, wobei die genannten Leuchten in Bezug auf ihren Haltesitz ausgerichtet werden können.

13. Planetarium nach einem der Ansprüche 1 bis 12, dadurch gekennzeichnet, daß es ein Steuermodul beinhaltet, das aus einem System mit elektronischen Karten zur Steuerung und Koordinierung der Bewegungen der Konstruktion besteht.
